# EUROPEAN PATENT APPLICATION

(11) **EP 3 107 068 A1**
(43) Date of publication of application: **21.12.2016**
(21) Application number: 15465522.9
(22) Date of filing: 15.06.2015
(51) Int. Cl.: G06T 7/00

(54) **VEHICLE DIAGNOSIS AND CAMERA ADJUSTMENT USING A DETECTION OF CAMERA INCLINATION ANGLES**

(71) Applicant: Continental Automotive GmbH, 30165 Hannover (DE)
(72) Inventor: Bacican, Cristian, 300751 Timisoara (RO); Dragan, Cristina-Mihaela, 300145 Timisoara (RO); Golgut, Ciprian, 307287 Mosnita Veche (RO); Todor, Iosif, 300751 Timisoara (RO)
(74) Representative: Büchner, Jörg

(57) **Abstract**

A method for detecting a misalignment of a vehicle chassis by using image data of a vehicle camera. Image data is received from the vehicle camera and a horizon position and a position of a camera axis is identified. A distance between the horizon and the position of the camera axis is derived and compared with a previously calibrated distance. If a misalignment value, which is derived from the difference, exceeds a first pre-determined threshold, a corresponding output signal is generated.

## Description

The present specification relates to the processing of camera sensor data for monitoring a condition of a vehicle and for adjusting a vehicle camera accordingly.

Optical sensors, such as vehicle cameras may be used in advanced driver assistance systems (ADAS) to perform a variety of tasks, such as lane keeping, distance keeping, cruise control, parking aid, automatic emergency braking, collision avoidance, pedestrian detection, traffic sign recognition and driver-drowsiness warning. Furthermore, it has been suggested to use a vehicle camera for monitoring a road surface ahead of a car in order to control an active suspension system.

By contrast, the present application discloses a computer implemented method and a device for monitoring a condition of the suspension and the tires of a vehicle with a vehicle camera and for adjusting the vehicle camera accordingly. Herein, camera adjustment also comprises an adjustment of a camera image processing.

A monitoring of the suspension and tires according to the present specification may be used, among others, to improve the functionality of the vehicle camera and/or to improve the automatic vehicle diagnosis of suspension and tires.

In particular, a method and device according to the present specification can be used to reduce or avoid a repeated recalibration of the vehicle camera due to insufficient air pressure in the wheels or even broken or damaged absorbers. In particular, it can reduce or avoid a recalibration on every ignition or an unavailability of the camera due to impossibility of calibration or impairment of some camera functions.

Thereby, the method and system according to the present specification helps to avoid a scenario in which an online calibration arrives at a point where recalibration is impossible and, consequently, a camera controller shuts down the vehicle camera.

Furthermore, the vehicle safety can be improved if a damaged absorber or a damaged absorber spring, a damaged tire of insufficient tire pressure can be detected earlier. In a particular embodiment, an additional output coming from evaluation of pitch and roll angle is used to warn the driver of problems with the shock absorbers. The pitch angle and the roll angle are also referred to as tilt angle.

Through the evaluation of pitch and roll angles of a vehicle camera, a need for changing spare parts can be determined. In particular, a method and device according to the present specification can be used to detect the below mentioned scenario in which a recalibration process is requested each time when the vehicle is started.

According to this scenario, the vehicle camera restarts after each ignition process and starts to evaluate the camera image. If the camera detects a difference between the old horizon line and the new horizon line it tries to recalibrate. By way of example, this may happen due to a damaged absorber.

If this recalibration process is requested at every ignition and a deterioration of the position of an image cropping is observed, the system can trigger a service request for the service in which absorbers and springs can be tested.

For example, the system can highlight the defect through an optical indicator in the dashboard and provide more detailed information on request on a screen of a board computer in the middle console, as a printout, on a data carrier, via a data output or via a wireless connection. Furthermore, the camera image may be recovered by predicting and/or tracking a time dependent change of the camera inclination.

In a further embodiment, the system uses an air pressure of the wheels, which is available through a tire pressure monitoring system (TPMS), which may monitor the tire pressure directly or indirectly. Thereby, the information from the tilt of the camera, and the time dependent image recovery can be made more reliable and the detection of an absorber problem can be improved.

According to a further embodiment, a function of an emergency brake assist (EBA) can be modified according to a detected health state of the suspension. In particular, a braking force can be moved from the front axis to the back axis, if an observed tilt of the pitch angle indicates that an absorber is damaged.

The present specification discloses a computer implemented method for detecting a misalignment of a vehicle chassis by using image data of a vehicle camera. A computation unit receives image data from the vehicle camera. The image data comprises at least a portion of a ground surface. The image data is used to identify a position of a horizon in an image frame of the image data. If a horizon position is already detected in one image frame, the horizon detection can be accelerated by tracking the horizon position, for example by tracking a point on a unit sphere. By way of example, the unit sphere can be centred around the origin of a camera coordinate system, which is centered in a focal point of the camera, and the projection to the unit sphere can be carried out by normalizing vectors of points on an image plane.

Furthermore, a position of a camera axis of the vehicle camera is identified in the image data, for example by using a known position of the camera axis on a sensor plane and a known position of a crop image, which is used for the image processing, on the sensor plane. A camera axis is an axis or direction in a coordinate system that moves together with the camera, for example a camera axis can be provided by an optical axis of the camera.

A distance is derived between the horizon and the position of the camera axis, for example by determining a pixel distance between pixels in computer memory or by determining a pixel distance between sensor pixels.

A previously determined or calibrated distance between the horizon and the position of the camera axis is retrieved from a computer readable memory and a misalignment value is derived from the difference between the derived distance and the previously calibrated distance.

If the misalignment value exceeds a first pre-determined threshold a corresponding pre-determined output signal is generated. The output signal may comprise data about the amount and direction of the misalignment or also about a time dependence of the misalignment.

According to a further embodiment, a warning signal is generated if the misalignment value exceeds a second threshold, which is larger than the first threshold. For example, the second threshold can be chosen to indicate that a shock absorber of the vehicle suspension must be exchanged as soon as possible if the second threshold is exceeded.

According to a further embodiment, the generated output signal indicates the misalignment value and a cropping area is adjusted correspondingly. The adjustment of the image cropping area depends on the misalignment value, for example the cropping area can be shifted area by an amount proportional to the misalignment value.

According to a further embodiment, the misalignment value is correlated with data relating to a suspension of the chassis, such as technical specifications, the last replacement of spare part, suspension sensor data, among others, and a corresponding warning signal is generated.

According to yet a further embodiment, the misalignment value is tracked over time and the misalignment value is correlated with data relating to a suspension of the chassis, such as technical specifications, a time of last replacement, suspension sensor data, among others. A corresponding service report data is generated, for example for display on a screen or other type of output device, wherein the service report data relates to a health state of the suspension.

According to a further modification, tire pressure data is received from a tire pressure monitoring system. The tire pressure data is used as input data in the step of correlating the misalignment value with the data relating to a suspension of the chassis for reducing or eliminating a contribution to the misalignment value that is caused by a variation of the tire pressure.

Conversely, the received tire pressure data can also be used for reducing or eliminating a contribution to the misalignment value that is caused by the suspension, and for generating a signal that is indicative of a health state or of a pressure state of the tires.

Furthermore, the camera data can also be used to adjust the camera, wherein camera adjustment also refers to an adjustment of the processing of the camera image frames, such as an position adjustment of a crop image. In one embodiment, the position of the camera axis is tracked in the image data with a tracking algorithm, for example with a Kalman filter, and the camera is adjusted according to the tracked position.

To improve the tracking, the tracking algorithm can use a physical model of a vehicle suspension of the vehicle chassis as input and/or sensor data from a vehicle suspension system. Furthermore, the tracking algorithm can also use a signal from a tire-pressure monitoring system as input. In the context of the present specification the expression algorithm refers in particular to the computer implementation of an algorithm.

According to a further embodiment, an output value of the tracking algorithm is used to stabilize a camera image, for example by adjusting a crop area in accordance with a tracked position of the camera axis.

According to a further embodiment, an electronic brake assistant is controlled based on the misalignment value to balance out a braking force between a front and a rear axis of the vehicle.

According to a further embodiment, an active suspension is controlled based on the misalignment value to compensate for a deterioration of an absorber of the active suspension, for example by adjusting the pressure of a pneumatic or hydropneumatic suspension.

According to a further embodiment, a road image is scanned for obstacles, such as traffic humps, pot holes, or cobblestones based on the image data of the vehicle camera. The speed of the vehicle is automatically slowed down based on the misalignment value if an obstacle is detected. If the suspension is damaged it can be advantageous to drive more carefully to avoid further damage until the suspension is repaired.

According to a further aspect, the present specification discloses a computation unit, the computation unit, which comprises an input connection for receiving image data from a vehicle camera, such as a plug for connecting an automotive data bus, or a wireless connection and an electronic circuit processing the data signal, and an output connecting for outputting a response signal. The input and output connection may also coincide.

Furthermore, the computation unit comprises a computer readable memory for storing a position of a camera axis, such as an optical axis of a camera relative to an image frame, for example relative to the boundaries of the image frame or to the midpoint of the image frame.

The computation unit is operative to execute the aforementioned method. To this end, the computation unit comprises computation means, such as microprocessor, integrated circuit and a computer readable memory with suitable computer readable instructions to execute the steps of the aforementioned method.

In particular, the computation unit is operative to receive image data over the input connection, to determine a position of a horizon in an image frame of the image data, and to determine a position of a camera axis, such as an optical axis, of the vehicle camera in the image data.

Furthermore, the computation unit is operative to derive a distance between the horizon and the position of the camera axis, to store position data of the camera axis in the computer readable memory, the position data being derived from the position of the optical axis, to retrieve a previously stored position data of the camera axis from the computer readable memory and to derive a misalignment value from the difference between the derived distance and the previously calibrated distance.

If the misalignment value exceeds a first pre-determined threshold, the computation unit outputs a pre-determined output signal over the output connection. By way of example, the computation unit can be provided as a board computer or a portion of a board computer the board computer may also provide further information, such as the location of the nearest workshop where spare parts are available and a price estimate.

Furthermore, the current specification discloses a vehicle comprising the aforementioned computation unit. A vehicle camera, for example the front camera, is connected to the input connection of the computation unit and an automotive data bus of the vehicle is connected to a display of the vehicle for outputting an optical signal in response to the misalignment value. In particular, the output connection may be connected to a board computer which is connected to a display, to a dashboard indicator lights, or to a controller of an electronic instrument cluster.

The vehicle camera may be connected by the same automotive data bus that is provided for the output data of the computation unit, but preferentially the vehicle camera is connected by a separate high-speed data bus which is suitable for transmitting camera image data. Furthermore, sensors may be connected to the computation unit, either directly or via an automotive data bus.

The subject of the present specification is now explained in further detail with respect to the following Figures, wherein
- Figure 1: shows a vehicle with a camera system,
- Figure 2: shows a comparison of an actual location with a previously calibrated location of an optical axis in a camera image of the camera system,
- Figure 3: shows three locations of the optical axis, of which two are within a tilt threshold and one of them exceeds the tilt threshold, and
- Figure 4: shows a vehicle control system which is connected to the cameras of Fig. 1.

In the following description, details are provided to describe the embodiments of a method and device according to present specification. It shall be apparent to one skilled in the art, however, that the embodiments may be practised without such details.

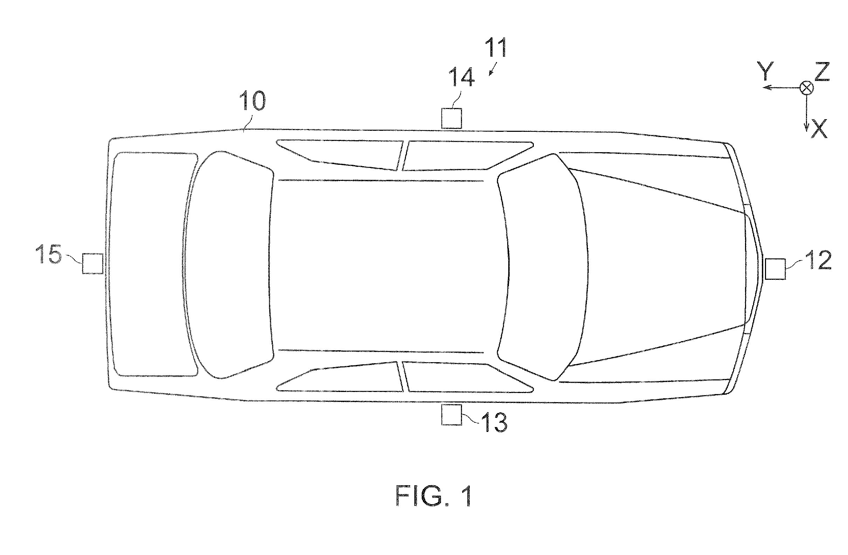

Figure 1 shows a vehicle 10, which comprises a surround view system 11 with a front camera 12, a right camera 13, a left camera 14 and a rear camera 15.

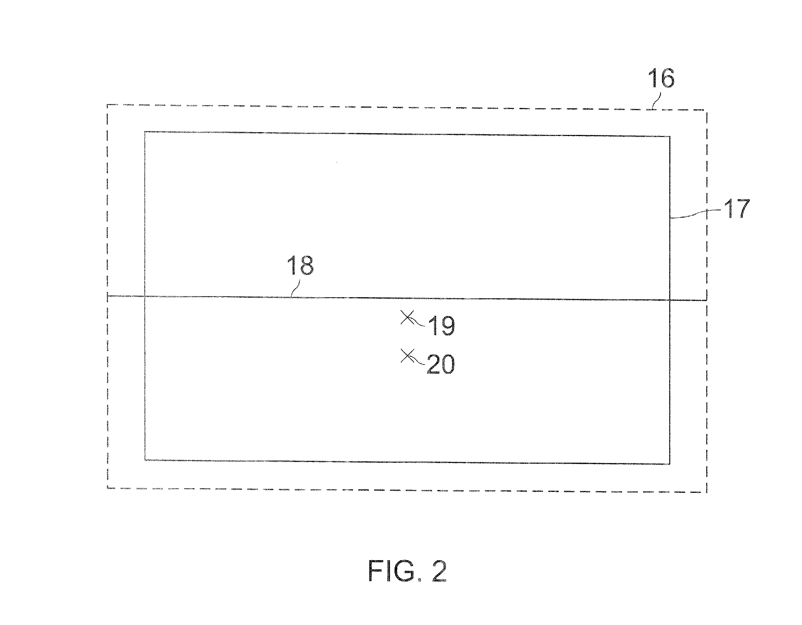

Figure 2 shows an outer image area 16 with a cropped image area 17. A horizon 18 is indicated as a horizontal line across the cropped image area 17. The image sensor may be provided by the front view camera 12, but also by the rear view camera 15 or a left or right side view camera 13, 14.

In the example of Fig. 2 the vehicle camera 12, 13, 14, or 15 is slightly tilted towards a ground surface or road surface such that a position of an optical axis of the camera, which is indicated by cross 19, is positioned slightly below the horizon 18.

The position of the optical axis on the sensor surface is determined by the intrinsic camera parameters, which may be stored as factory settings or as a calibration result in a computer readable memory of the vehicle camera. In particular, the position can be provided by a rectangular intersection of an imaginary line through the optical axis of the camera lens with the sensor surface.

A further cross 20 marks a position of the optical axis in a scenario in which the suspension is damaged such that the vehicle camera tilts towards the ground surface.

A vehicle coordinate system with axis X, Y, Z is indicated to the left of the vehicle 10. The vehicle coordinate system moves together with the vehicle 10. The X-axis and the Y-axis are aligned to the longitudinal and to the lateral axis of the vehicle 10, respectively. The Z-axis is oriented perpendicular to a plane of the vehicle chassis and the X-axis and the Y-axis are parallel to the plane of the vehicle chassis. If the vehicle 10 is empty, the suspension and tires are in good condition, and the ground surface on which the vehicle is supported is horizontal, the Z-axis of the vehicle coordinate system is generally also perpendicular to the ground surface.

An image processing unit, which may be provided in the cameras 12, 13, 14, 15 and/or as a centralized image processing unit, and which is connected to all cameras 12, 13, 14, 15, can determine the position of the horizon 18 in various ways. In one embodiment, the horizon 18 is determined by using edge recognition, for example by detecting at least two pairs of parallel lines on a ground surface. In the perspective projection, the first pair of parallel lines converges to a first vanishing point on the horizon 18 and the second pair of parallel lines converges two a second vanishing point on the horizon 18. By way of example, the perspective projection can be derived by correcting the raw sensor for image distortions.

A further method, which is also based on edge recognition, comprises determining a clustering of vanishing points in the perspective projection to a unit sphere. Thereby, false vanishing points and other vanishing points, which are not located on the horizon, can be avoided.

If the orientation of the sensor plane relative to a vehicle coordinate system is known, a horizon position can also be determined using other orientation sensor data such as data from a gyro compass sensor, a liquid levels sensor, a gravity sensor or output data of a GPS system. For example, a vehicle pose can be estimated by using known positions of two or more satellites on a virtual sphere. The horizon position on the sensor plane can then be derived by using the derived vehicle pose and the known orientation of the sensor plane in the vehicle coordinate system. By using orientation sensor data, a horizon position of the horizon 18 can also be provided when there are no parallel lines in the environment.

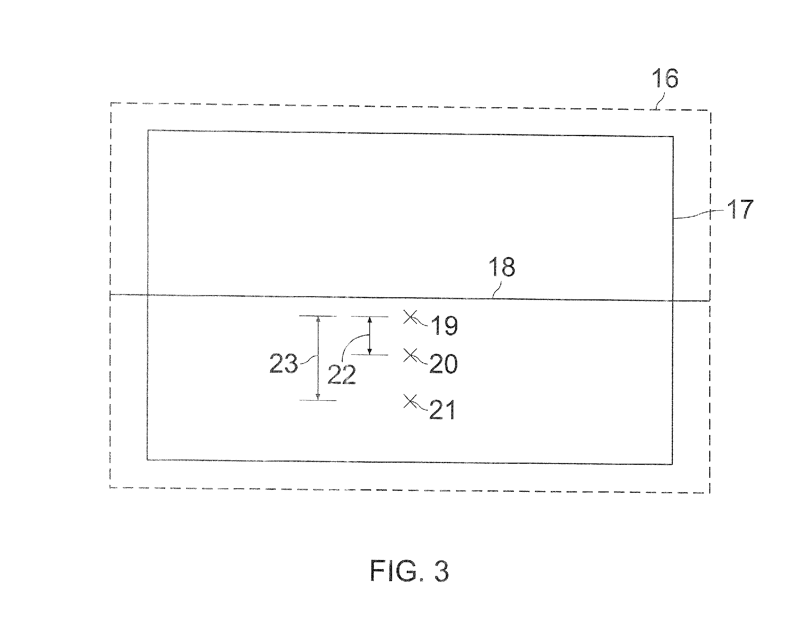

Fig. 3 shows a situation in which a distance of a first location 20 of an optical axis is equal to a first threshold 22, and in which a second location 21 of an optical axis is equal to a second threshold 23. When a tilt is greater or equal than the first threshold 22, this indicates that the suspension of the vehicle is damaged. When the tilt is greater than the second threshold 23, it indicates that the suspension of the vehicle is severely damaged and must be replaced and/or that there are other contributing factors, which contribute to the camera tilt.

The results of the front and rear camera 12, 15 may be combined in order to determine a tilt around the X-axis of the vehicle coordinate system more accurately. Similarly, the results from the image data of the side view cameras 13, 14 may be used separately or in combination to determine a tilt around the Y-axis of the vehicle coordinate system. The tilt around the X-axis is also referred to as pitch angle and the tilt around the Y-axis is also referred to as roll angle.

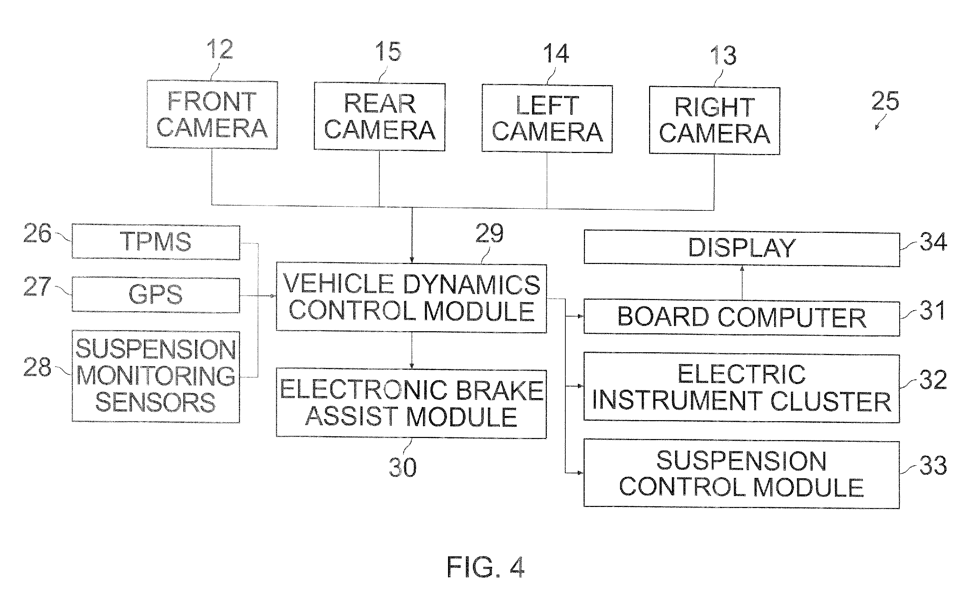

Figure 4 shows a vehicle control system 25, which is connected to the vehicle cameras 12, 13, 14, 15 of Fig. 1.

A data output of a tire pressure monitoring system 26, a data output of a GPS system 27, a data output of a suspension monitoring system 28 and respective data outputs of the vehicle cameras 12, 13, 14, 15 are connected to respective data inputs of a vehicle dynamics control module 29. Respective data output connections of the vehicle dynamics control module 29 are connected to an electronic brake assist module 30, a car board computer 31, an electronic instrument cluster 32, and to a suspension control module 33. A display 34 is connected to the board computer 31.

Although the above description contains much specificity, these should not be construed as limiting the scope of the embodiments but merely providing illustration of the foreseeable embodiments. Especially the above stated advantages of the embodiments should not be construed as limiting the scope of the embodiments but merely to explain possible achievements if the described embodiments are put into practise. Thus, the scope of the embodiments should be determined by the claims and their equivalents, rather than by the examples given.

For example, the TPMS 26, the GPS system 27 and the suspension monitoring sensors 28 of the vehicle control system 25 of Fig. 4 are not required although they may be provided to improve the accuracy of the vehicle diagnostics.

## Claims

1. A method for detecting a misalignment of a vehicle chassis by using image data of a vehicle camera (12, 13, 14, 15) of a vehicle (10) comprising
- receiving image data from the vehicle camera (12, 13, 14, 15),
- identifying a position of a horizon (18) in the image data,
- identifying a position (19, 20, 21) of a camera axis of the vehicle camera in the image data,
- deriving a distance between the horizon and the position (19, 20, 21) of the camera axis,
- retrieving a previously calibrated distance between the horizon (18) and the position (19, 20, 21) of the camera axis from a computer readable memory,
- deriving a misalignment value from the difference between the derived distance and the previously calibrated distance,
if the misalignment value exceeds a first pre-determined threshold
- generating an output signal.

2. The method of claim 1, comprising
generating a warning signal if the misalignment value exceeds a second threshold, the second threshold being larger than the first threshold.

3. The method of claim 1 or claim 2, wherein the output signal indicates the misalignment value, the method comprising
adjusting a cropping area (17), wherein the adjustment depends on the misalignment value.

4. The method according to claim 1, 2 or 3 comprising correlating the misalignment value with data relating to a suspension of the chassis and generating a warning signal.

5. The method according to one of the preceding claims, comprising
tracking the misalignment value over time, correlating the misalignment value with data relating to a suspension of the chassis and
generating corresponding service report data,
the service report data relating to a health state of the suspension.

6. The method according to claim 5, comprising receiving tire pressure data from a tire pressure monitoring system,
using the tire pressure data as input data in the step of correlating the misalignment value with the data relating to a suspension of the chassis for reducing a contribution to the misalignment value that is caused by a variation of the tire pressure.

7. The method according to claim 5 or 6, comprising receiving tire pressure data from a tire pressure monitoring system,
using the tire pressure data as input data in the step of correlating the misalignment value with the data relating to a suspension of the chassis for reducing a contribution to the misalignment value that is caused by the suspension,
generating a signal that is indicative of a health state or a pressure state of the tires.

8. The method according to one of the preceding claims,
comprising tracking the position of the camera axis in the image data with a tracking algorithm,
adjusting the camera (12, 13, 14, 15) according to the tracked position.

9. The method according to claim 8, wherein the tracking algorithm uses a physical model of a vehicle suspension of the vehicle chassis as input.

10. The method according to claim 8 or 9, comprising using an output value of the tracking algorithm to stabilize a camera image.

11. The method according to one of the preceding claims comprising
controlling an electronic brake assistant (30) based on the misalignment value to balance out a braking force between a front and a rear axis of the vehicle (10).

12. The method according to one of the preceding claims comprising controlling an active suspension based on the misalignment value to compensate for a deterioration of the active suspension.

13. The method according to one of the preceding claims comprising scanning a road image for obstacles based on the image data of the vehicle camera (12, 13, 14, 15), and automatically slowing down the speed of the vehicle (10) based on the misalignment value if an obstacle is detected.

14. Computation unit, the computation unit comprising an input connection for receiving image data from a vehicle camera (12, 13, 14, 15) of a vehicle (10),
an output connecting for outputting a response signal, a computer readable memory for storing a position of a camera axis relative to an image frame,
wherein the computation unit is operative to
- receive image data over the connection,
- determine a position of a horizon (18) in the image data,
- determine a position (19, 20, 21) of a camera axis of the vehicle camera (12, 13, 14, 15) in the image data,
- derive a distance between the horizon (18) and the position of the camera axis,
- store position data of the camera axis in the computer readable memory, the position data being derived from the position of the optical axis,
- retrieve a previously stored position data of the camera axis from the computer readable memory,
- derive a misalignment value from the difference between the derived distance and the previously calibrated distance,
if the misalignment value exceeds a first pre-determined threshold
- outputting an output signal over the output connection.

15. A vehicle (10) comprising the computation unit according to claim 14, wherein a vehicle camera (12, 13, 14, 15) of the vehicle (10) is connected to the input connection of the computation unit, and wherein
an automotive data bus of the vehicle (10) is connected to a display (34) of the vehicle (10).
